# EUROPEAN PATENT APPLICATION

(11) **EP 4 738 838 A1**
(43) Date of publication of application: **06.05.2026**
(21) Application number: 24306847.5
(22) Date of filing: 31.10.2024
(51) Int. Cl.: H04N 21/234, G06T 9/00, G06T 17/00, H04N 21/44, H04N 21/81

(54) **KEYPOINTS AND LANDMARKS IN AVATAR REPRESENTATION**

(71) Applicant: InterDigital CE Patent Holdings, SAS, 75017 Paris (FR)
(72) Inventor: COVA REGATEIRO, João Pedro, 35220 CHATEAUBOURG (FR); GOSSELIN, Philippe Henri, 35235 THORIGNE-FOUILLARD (FR); LE CLERC, Francois, 35590 L'HERMITAGE (FR)
(74) Representative: Vossius & Partner Patentanwälte Rechtsanwälte mbB

(57) **Abstract**

Systems, methods, and instrumentalities are disclosed for avatar keypoints and landmarks representation. A file (e.g., an MPEG avatar representation format (MARF) file) may be received. The file may include a plurality of assets. The file may indicate keypoint and landmark component information. An asset may be selected from the plurality of assets in the file based on parsing the file. A container may be determined based on the selected asset and the keypoint and landmark component information. At least one of a keypoint or a landmark may be determined based on the determined container. At least one of a keypoint or a landmark may animate an avatar based on the at least one of the keypoint or landmark.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for avatar keypoints and landmarks representation. A file (e.g., an MPEG avatar representation format (MARF) file) may be received. The file may include a plurality of assets. The file may indicate keypoint and landmark component information. An asset may be selected from the plurality of assets in the file based on parsing the file. A container may be determined based on the selected asset and the keypoint and landmark component information. At least one of a keypoint or a landmark may be determined based on the determined container. At least one of a keypoint or a landmark may animate an avatar based on the at least one of the keypoint or landmark.

In examples, the file may include a keypoints property. The keypoints property may indicate the keypoint and landmark component information. The keypoint property may indicate a list of keypoint sets and/or may indicate at least one of a name associated with each keypoint set in the list of keypoint sets or an anchor associated with each keypoint set in the list of keypoint sets.

In examples, the file may include an anchors property. The anchors property may indicate the keypoint and landmark component information. The anchors property may indicate a list of anchors and/or may indicate at least one of an identification, a name, or a transform associated with each anchor in the list of anchors.

In examples, the anchors property may indicate a binding list and/or a binding weight. The binding list may indicate a list of anchors identifiers. In examples, the anchors property further may indicate at least one of a joints indication or a vertices indication. The joints indication may indicate a location of a file associated with a list of vertex identifiers. The vertices indication may indicate a location of a file associated with a list of vertex identifiers.

In examples, the file may include a landmark set property. The landmark set property may indicate the keypoint and landmark component information. The landmark set property may indicate a list of landmark sets for a mesh. The landmark set property may indicate at least one of a name, a description, a type, a landmark identifier, or a mesh associated with each landmark set in the list of landmark sets.

In examples, the file may include a landmarks property. The landmarks property may indicate the keypoint and landmark component information. The landmarks property may indicate a list of landmarks. The landmarks property may indicate at least one of an identifier, a name, a description, a type, a vertex, a face, or a weight associated with each landmark in the list of landmarks.

In examples, the file may include at least one of a keypoint set property or a landmark set property. The keypoint set property may indicate a keypoint set identifier associated with a controller set associated with the asset. The landmark set property may indicate a landmark set identifier associated with a landmark set associated with the asset.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows facial landmarks associated with an avatar model.
FIG. 5 shows an example of parsing of an MPEG avatar representation format (MARF) file.
FIG. 6 shows an example flowchart for attributing avatar landmarks.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

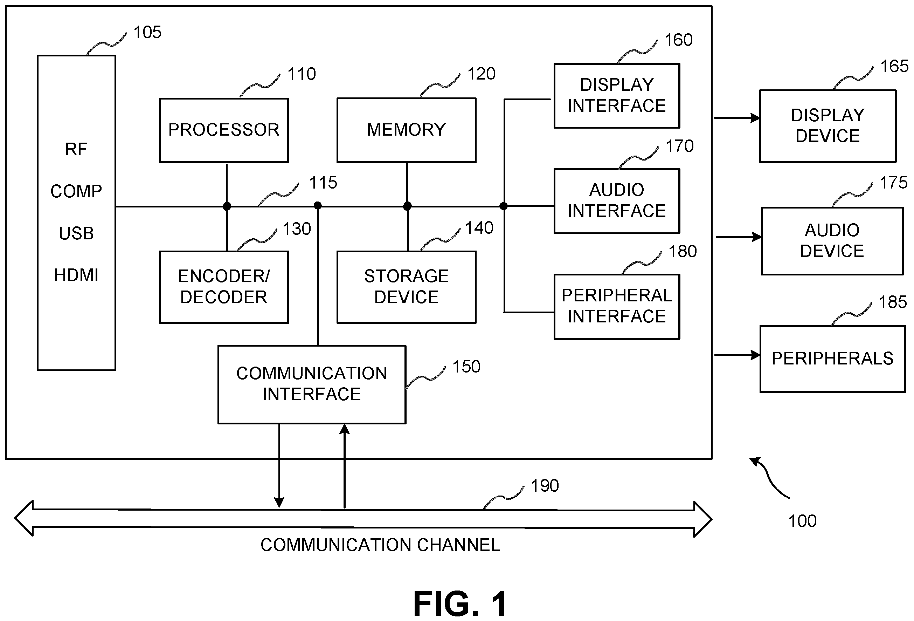

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

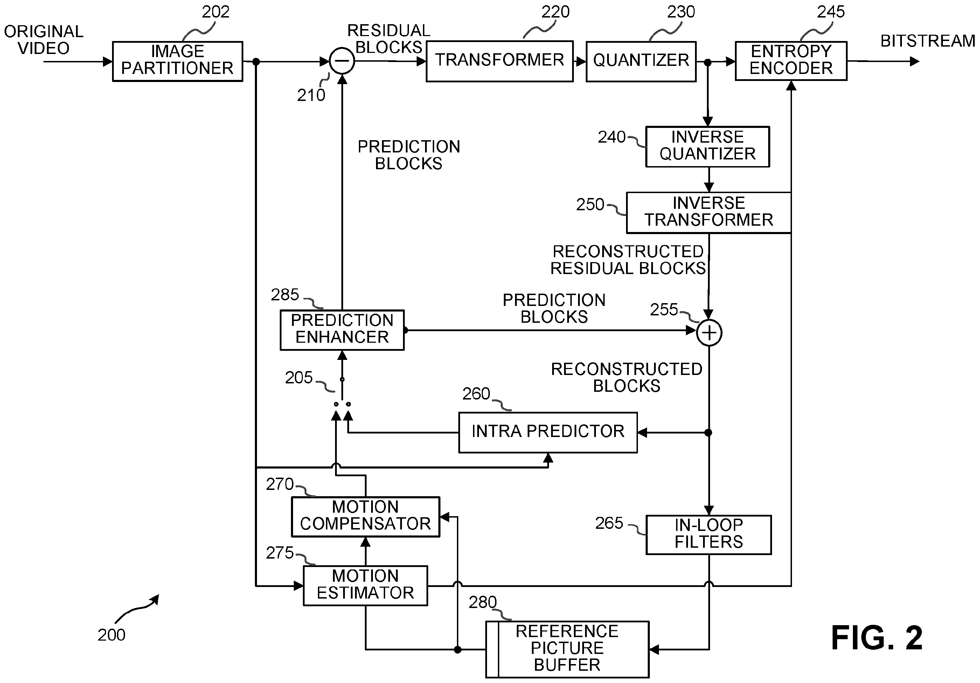

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

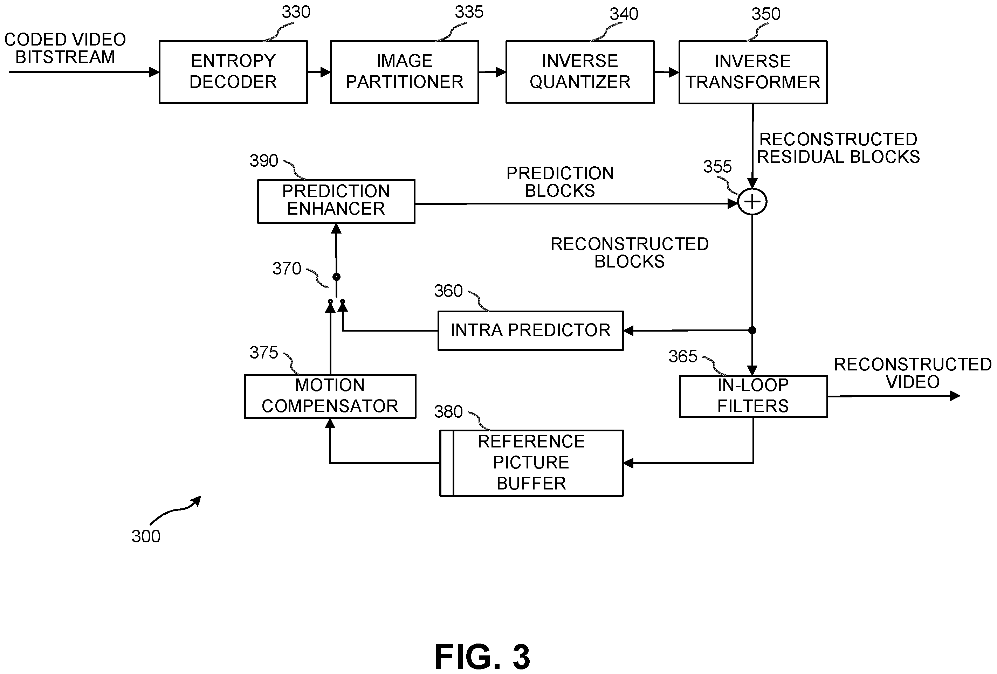

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Avatar landmarks and/or keypoints may be encoded in the MPEG Avatar Representation Format (MARF). Keypoints may be a generalization of vertices and/or landmarks of avatars. Keypoints may be used as reference points (e.g., anchors) in the 3D and/or 2D space. Animations may be produced by using (e.g., only) key points, for example, a group of vertices (e.g., controllers, joints, mesh faces and/or landmarks) may be clustered together and/or assigned to a single or multiple keypoints. If this assignment is performed, the 2D/3D transformation of a keypoint may be leveraged to animate the set of parameters attached to the keypoint.

Landmarks may represent specific points on a 3D mesh surface that may have stable semantic meaning. For example, the top of the nose may serve as a landmark that, from a semantical point of view, may be at the same location on the face, with its coordinates varying from one avatar to another.

MARF (e.g., provided as part of MPEG-I Scene Description) may allow the encoding of an avatar and/or animation streams.

The Scene Description (SD) (e.g., MPEG-I SD) format using the MPEG_node avatar extension may allow the definition of an avatar model. Applications may determine that a mesh is an avatar and may use the avatar as such. In examples, if the avatar is a usual human body mesh, an application may place the avatar in a scene, and/or let the user move the avatar within a scene in the world (e.g., a virtual world).

Landmarks may be used with avatar(s) to provide features. In examples, facial landmarks may be used for XR devices calibration and/or animation capture. Facial landmarks may be used for registering the topology of the avatar against other avatar topologies. The Morgan avatar model (e.g., MPEG Morgan avatar model) may define a set of 68 facial landmarks (see Figure 1).

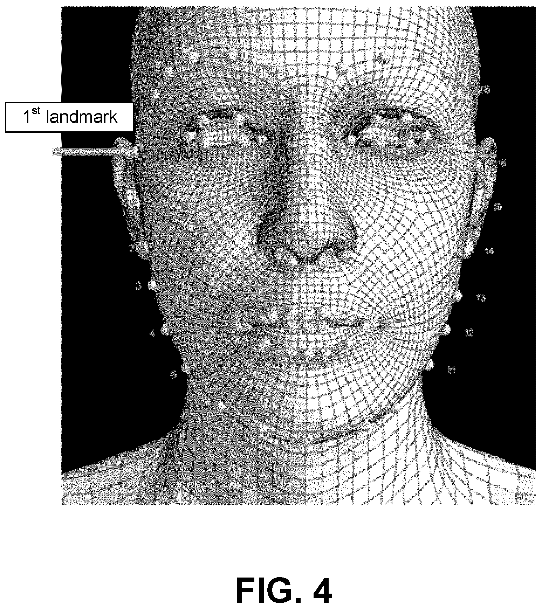

FIG. 4 shows facial landmarks associated with an avatar model (e.g., Morgan avatar model). Landmarks may be points on a mesh with a stable semantic meaning. In examples, landmarks index 30 may be the one on the top of the nose in FIG. 4. This stable location may be stored given a topology. In examples, the index of a vertex may define the stable location. As a result, even if the mesh changes (e.g. the coordinates of vertices change), as long as the topology remains the same, the location of the landmarks may remain the same. For example, in the Morgan topology, the index of vertex on the top of the nose may be 8616. The location of the landmarks may be stored using the index of a face and three barycentric coordinate weights: this case may not be limited to vertices, and a (e.g., any) location on the mesh may be used.

In examples, landmark sets may not be signaled in a scene description or MPEG avatar formats. In examples, at least two files may be required for signaling: one with the avatar model (e.g., a format that supports avatar encoding (e.g., gITF)), and the other one with landmarks (e.g., a format that supports points encoding (e.g., CSV)). An application or a user may create a link between the file type with the avatar model and the file type with landmarks. In examples, the type, meaning or purpose of landmark sets may not be signaled. In examples, the landmark semantic definition used by the above-referenced MPEG Morgan avatar model may be based on a common landmark set, for example, used in face datasets and applications.

In examples, a landmark semantic definition may not define the location on a topology (e.g., vertex, face, and/or weights) but location in a semantic fashion, for example, "the top of the nose" or "center of the left ear". Such information may be required to enable various features described herein. In examples, facial landmarks coordinates may be predicted on a user whose face is captured by a webcam. The facial landmarks may be transposed onto an avatar to produce the user expressions. The facial landmarks may be automatically generated by an application, for example, based on the landmarks location on the avatar model that are available to the application. In examples, the application may select the facial landmarks detector, for example, based on a landmark semantic definition.

In formats (e.g., some exemplary formats) that support keypoints and/or landmarks, the corresponding parameters may be stored using a dedicated encoding format. In examples, an application that may encode an avatar using the glTF format may encode the corresponding avatar parameters with the glTF encoding. In examples, the application may use keypoints or landmarks that may not be encoded in the glTF format. In such cases, the signaling may not be possible and/or be lossy.

In examples, an additional file may be provided where keypoints and/or landmarks may be encoded alongside the main avatar file (e.g., like AJIF or gITF). The application may use a format that supports features (e.g., all the features) for encoding keypoints and landmarks while using a main avatar file for main components, for example, mesh or textures. The application may be capable of determining that the additional file is provided, and that the additional file includes the parameters (e.g., additional parameters including the keypoints and/or landmarks). The application may also be capable of determining how to associate the components associated with an avatar in the main avatar file to the additional parameters in the additional file.

Regarding the file (e.g., the MARF file), where landmarks and/or keypoints are stored in a container outside the file (e.g., the MARF file). The file (e.g., MARF file) may refer to this container, as well as the information (e.g., all the information) required to link the landmarks and/or keypoints to the avatar. AJIF and/or glTF may be used. In such cases, similar information (e.g., similar information to the information required to link the landmarks and/or keypoints to the avatar) may be signaled to retrieve this data (e.g., new data) and how to link the landmarks and/or keypoints to the avatar.

Signaling with the file (e.g., the MARF file) may be provided. An avatar representation format (e.g., mpeg) may be provided. In examples, the MPEG Avatar Representation Format (MARF) may be a representation for 3D animatable avatars. The file (e.g., the MARF file) may serve at least two purposes, for example. A (e.g., first) purpose of the file may be to provide an exchange format that allows users to capture their 3D avatars (e.g., once) and/or import their 3D avatars for use (e.g., anywhere) across applications, platforms, and/or Metaverse worlds. Another purpose may be to provide a standardized interoperable storage and exchange animation format that applications and services may build on.

The file (e.g., a MPEG ARF (MARF)) may be composed of the following components, for example. A base avatar container may include a container that stores components (e.g., all components) of the user's avatar. The base avatar container may include meshes, skeleton, and/or blend shapes. Animation streams may include a set of animation streams that may be formatted according to this specification and/or may be used to animate the base avatar model in the container. Body animation through Linear Blend Skinning and/or facial expressions through blend shapes may be supported. The file (e.g., the MARF file) may not support the signaling of keypoints and/or landmarks and may be limited to joints. Features are described about components including but not limited to "keypoints" and/or "landmarks" components. "keypoints" and/or "landmarks" components may be added to the components of file (e.g., the MARF).

| **Object/Property Name** | | | | **Type** | **Use** | **Description** |
|---|---|---|---|---|---|---|
| components | | | | object | M | The core of the MARF document, listing components (e.g., all components) of the MARF container. |
| | | skeletons | | array(o bject) | M | Includes a list of skeletons, (e.g., each) with a name and/or set of joints. |
| | | | name | string | M | The name of the skeleton. |
| | | | joints | array | M | Includes a list of joint IDs. A skeleton may be a subset of a full humanoid skeleton (e.g. by referencing the head and/or hand joints). |
| | | skins | | array(o bject) | M | Includes a list of skins, (e.g., each) with a name and its associated skinned meshes. |
| | | | name | string | M | The name of the skin. |
| | | | skinnedMeshes | array | M | An array of numbers representing the IDs of the meshes associated with this skin. |
| | | blendshapes | | array(o bject) | M | Includes a list of blendshape sets, each with a basis mesh, encoding, and shapes. |
| | | | basisMesh | number | M | The ID of the mesh that the blendshapes are based on. |
| | | | encoding | string | M | The encoding used for the blendshapes. |
| | | | shapes | array | M | Includes a list of shapes, each with an ID, name, and the ID of the mesh representing the shape. |
| | | joints | | array(o bject) | M | Includes a list of joints, each with an ID, name, parent joint ID, transform matrix, and an optional inverse bind matrix. |
| | | | id | number | M | a unique identifier of this joint in the MARF container. |
| | | | name | string | M | a name assigned to the joint. |
| | | | parent | number | O | if present, the ID of the parent joint of this joint. The |
| | | | | | | root joint may not have an assigned parent. |
| | | | transform | array(n umber) | M | May provide the 4x4 transform matrix for the joint to define the position and orientation of the joint at rest pose. |
| | | | inverseBindMatrix | array(n umber) | O | May provide the inverse bind matrix for this joint. If present the location of the joint shall be adjusted by multiplying with the inverse bind matrix. |
| | | meshes | | array | M | May include a list of meshes, each with an ID, skinned status, levels of detail (LODs), and a name. |
| | | | id | number | M | The ID of the mesh. |
| | | | name | string | M | The name of the mesh. |
| | | | skinned | boolea n | M | May indicate whether the mesh is skinned (true) or not (false). |
| | | | lods | array | M | May include a list of LODs, each with LOD number, MIME type, location, embedded weights status, |
| | | | | | | joint weights, and protection information. |
| | | | Iod_id | number | M | The number identifying the LoD with which this representation is associated. |
| | | | mime | string | M | The MIME type that may identify the format of the mesh. In this version of the specification, the MIME type may be set to "model/gltf-binary". |
| | | | location | URI | M | Location of the LoD representation of this mesh. The location may be a pointer to a GLB file. |
| | | | embedded_wei ghts | boolea n | O | May indicate whether the mesh comes with the LBS weights for each vertex, associated with the identified joint sets. The default value is false. If set to true, the author may need to ensure that the embedded joint set matches the embedded joint set associated with this skinned mesh. |
| | | | | | | This element may not be present if "skinned" is set to false. |
| | | | joint_weights | URI | O | A link to the location of a binary file that provides a list of joint IDs and associated LBS weights for every vertex in this LoD mesh representation. |
| | | | | | | This element may not be present if "skinned" is set to false. |
| | | | compression | string | O | An identifier of the compressor used to compress this LoD representation of the mesh. |
| | | | protection | id | O | An identifier of the protection configuration that is applied to encrypt this LoD representation of the mesh. |
| | proprietary_animation | | | object | O | This object may provide information about an ML-based proprietary model for reconstruction and animation of the user's avatar. |
| | | scheme | | URI | M | A vendor-specific URN to identify the proprietary reconstruction and animation scheme. |
| | | items | | array(ur i) | M | A list of the items, e.g. pretrained models or model |
| | | | | | | weights, that are used by this proprietary reconstruction and animation scheme. |
| | | keypoints | | array(o bject) | M | Includes a list of keypoints sets. |
| | | | name | String | M | The name of the keypoints set |
| | | | anchors | array | M | Includes a list of anchors IDs. |
| | | anchors | | Array(o bject) | M | Contains a list of anchors, each with an identifier, a name, a transformation matrix and an optional binding list. |
| | | | id | Number | M | A unique identifier of the anchor. |
| | | | name | String | M | A semantical definition of the anchor. This can be used for indexing. |
| | | | transform | array(n umber) | M | A 4x4 transformation matrix of the anchor. This defines the spatial position and orientation of the anchor. |
| | | | binding | Array(n umber) | O | A list of anchors identifiers that are affected by this anchor. |
| | | | binding_weight | Array(fl oat) | O | A list of anchoring weights coefficients that weight the transformation matrices of the list of anchors defined in "binding". These lists are index aligned and each anchor transformation is transformed relative to the main anchor transformation. The weight determines the influence of the transformation over the binded anchors. |
| | | | joints | URI | O | A link to the location of a binary file that provides a list of joint ids. |
| | | | vertices | URI | O | A link to the location of a binary file that provides a list of vertex ids. |
| | | landmarkSet | | array(o bject) | M | Contains a list of landmarks set for a mesh. |
| | | | name | string | M | The name of the landmark set |
| | | | description | string | M | Landmark set description. |
| | | | type | string | M | Landmark set type |
| | | | landmarks | array | M | Contains a list of landmarks id. |
| | | | mesh | number | M | The ID of the mesh that the landmarks are based on. |
| | | landmarks | | Array(o bject) | M | Contains a list of landmarks, each with an identifier, a name, a description, a type, a set of vertices, a set of faces and a barycentric coordinate. |
| | | | id | Number | M | A unique identifier of the landmark. |
| | | | name | String | M | A semantical definition of the anchor. This can be used for indexing. |
| | | | description | string | M | Landmark description. |
| | | | type | string | M | Landmark set type |
| | | | vertex | number | O | The ID of the vertex that the landmark is based on |
| | | | face | number | O | The ID of the face that the landmark is based on |
| | | | weights | array(fl oat) | O | Barycentric coordinates of the landmark in the face it lies in. |

The "keypoints" property may be a property of the "components" root property of file (e.g., the MARF). The "keypoints" property may be an array of objects with the following properties. "name" may be the name of the keypoint set in the file (e.g., the MARF file). "anchors" may be the ID of a skeleton in the file (e.g., the MARF file) on which the controllers may be based on.

The "anchors" property may be a property of the "components" root property of file (e.g., the MARF). The "anchors" property may be an array of objects with the following properties. "id" may be the ID of the anchor. "name" may be the name of the keypoint set in the file (e.g., the MARF file). "transform" may be the transformation matrix of the anchor set in the file (e.g., the MARF file). "binding" may be the ID of a list of anchors linked or connected to this anchor in the file (e.g., the MARF file). "binding_weight" may be a list of floating coefficients that provides weights associated with the transformation matrix of the anchors listed in "biding" in the file (e.g., the MARF file). If the biding (e.g., only) includes a single element, and/or the binding_weights includes "0.5" if (e.g., every time) this anchor is transformed, only 0.5 of such transformation may be applied to the binded anchor. "joints" may be the URI of the container with the joints ID. "vertices" may be the URI of the container with the vertices ID.

The "landmarkSet" property is a property of the "components" root property of a file (e.g., the MARF). The "landmarkSet" property may be an array of objects with the following properties. The "name" property may indicate the name of the "landmarkSet" in the file (e.g., the MARF file). The "name" property may be used for indexing (e.g., to retrieve the landmark based on the name of the landmark). The "description" property may indicate the description of the "landmarkSet" in the file (e.g., the MARF file). In examples, a "description" property may be used in user interfaces to help the user understand which landmark set is being used. The "type" property may indicate the semantical description of the "landmarkSet" in the file (e.g., the MARF file). In examples, the landmark set semantic type may not be related to 3D coordinates or topology location (e.g., like indices), and may be "academic:facial:68" or "mpeg:avatar:2024:77", for example. These types may be included by an application or a standard, for example. A landmark set type may include the type of each landmark in the set. A special value, like "specific", may include a non-standard landmark set type. The "type" property of each landmark in "landmarks" may be included. The "landmarks" property may indicate a list of landmark definitions in the file (e.g., the MARF file). The size of this list may be consistent with the type. In examples, if the landmark set type has 68 landmarks, the "landmarks" list may include 68 items."binding_weight" may be a list of floating coefficient(s) that weights the transformation matrix of the anchors listed in "biding" in the file (e.g., the MARF file). If the biding includes (e.g., only includes) a single element, and/or the binding_weights include "0.5", if (e.g., every time) this anchor is transformed, 0.5 (e.g., only 0.5) of such transformation is applied to the binded anchor. "mesh" may be the mesh identifier in the file (e.g., the MARF file) to which the landmark is placed on.

The "landmarks" property may be considered a property of the "components" root property of the file (e.g., the MARF). The "landmarks" property may be an array of objects with the following properties. The "id" property may indicate the landmark identifier in the file (e.g., the MARF file). The "name" property may indicate the name of the landmark set in the file (e.g., the MARF file). The "name" property may indicate used for indexing, for example, to retrieve the landmark based on the name of the landmark. The "description" property may indicate the description of the landmark set in the file (e.g., the MARF file). In examples, a description may be used in user interfaces to help the user understand which landmark set is being used. The "type" property may indicate the semantical description of the landmark in the file (e.g., the MARF file). The landmark set semantic type may not be related to 3D coordinates or topology location (e.g., like indices), and may be a (e.g., formal) definition, like "the top of the nose" or "mpeg:avatar:landmark:nose:top". This property may be mandatory if the landmark is within a landmark set with no definitions, like the example of "specific" landmark set type. This property may be used to override the landmark types of a landmark set type. The "vertex" property may define the vertex index of the landmark in the file (e.g., the MARF file). If the "vertex" property is present, "face" and/or "weights" may not be present, "face" and/or "weights" properties may define a point on a mesh in the file (e.g., the MARF file). The "face" may be the index of the face (e.g., like a triangle). The "weights" property may indicate the barycentric coordinates of the point in the face it lies in (e.g., the barycentric weights associated with each edge of the face). Both properties may be present. In examples, if both properties are present, the "vertex" property may not be present.

A structure (e.g., a structure of MARF) may be provided. A "controller_set" property may be added to the assets in the structure of MARF (e.g., new properties are underlined):

| **Object/Property Name** | | | **Type** | **Use** | **Description** |
|---|---|---|---|---|---|
| structure | | | object | M | May include data related to the structure of the MARF container. |
| | lods | | number | M | May specifiy the levels of detail included in this MARF container. |
| | assets | | array | M | Lists the assets included in this MARF container. |
| | | name | string | M | The name of the asset. |
| | | type | ASSET_TYP E | M | The type of the asset. The following types are supported: |
| | | | | | • BODY |
| | | | | | • HEAD |
| | | | | | • HAND |
| | | | | | • ACCESSORY |
| | | | | | This list is extensible and may be extended in future versions of this specification. |
| | | skeleton | number | O | The ID of the skeleton associated with this asset. |
| | | blendshape_set | number | O | The ID of the blendshape set associated with the asset. |
| | | keypoint_set | number | O | The ID of the controller set associated with the asset. |
| | | landmark_set | number | O | The ID of the landmark set associated with the asset. |
| | | skin | number | O | The skin associated with the asset. |
| | | meshes | array(number) | M | An array of identifiers of the meshes that build this asset. |
| | protection | | object | M | Includes information about the encryption scheme used to protect the MARF container. |
| | | schemeld | string | M | The identifier of the encryption scheme. |
| | | schemeInfoData | string | M | Additional information about the encryption scheme. |

The "keypoint_set" and "landmark_set" properties introduced by this disclosure may refer to a keypoint and/or landmark set defined in the "keypoints", "anchors", "landmarkSet" and "landmarks" components of the file (e.g., the MARF file).

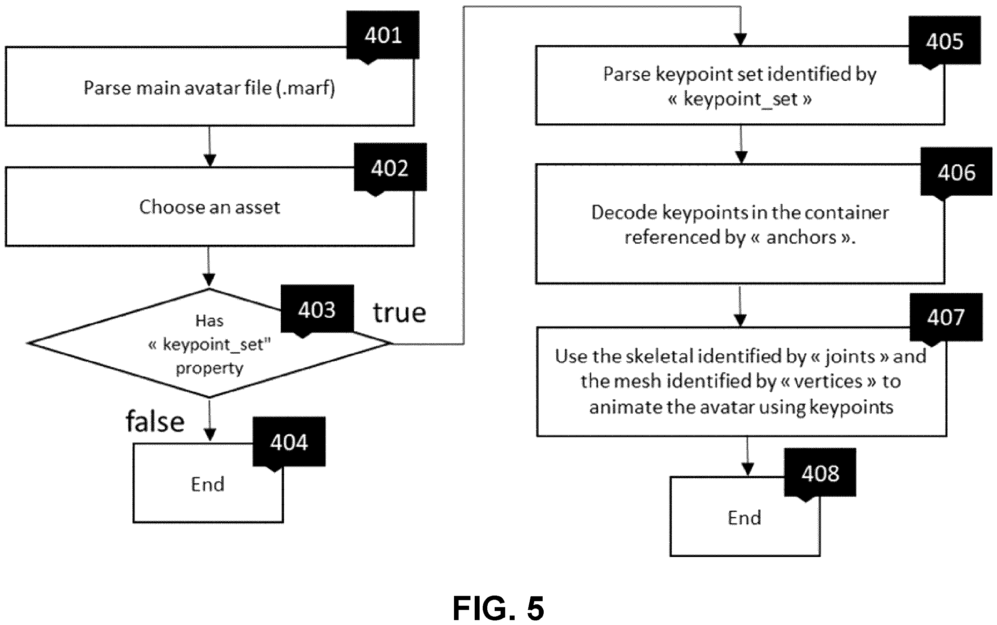

A processing model may be provided. Keypoints of a file (e.g., a MARF file) may be provided. FIG. 5 shows the parsing of a MARF file with the following properties (e.g., new properties). At 401, the parsing may start with an application may parsing the main avatar file (e.g., a .marf (MARF) file). At 402, the application may select one of the assets in the file (e.g., MARF file). At 403 and/or 404, if the asset has the "keypoint_set" property set as false, there may be no keypoints for this asset. The process may end. At 405, if the asset has the "keypoint _set" property set to true, the keypoint set referenced by "keypoint_set" may be parsed in the "keypoints" property in the "components" root property of the file (e.g., MARF file). At 406, the keypoint in the container referenced by the "anchors" property of the keypoint set may be decoded. At 407, the mesh identified by the "vertices" property of the anchors set and the skeleton identified by the "joints" property of the anchors set may be used to animate the avatar with the keypoints. At 408, the process may end.

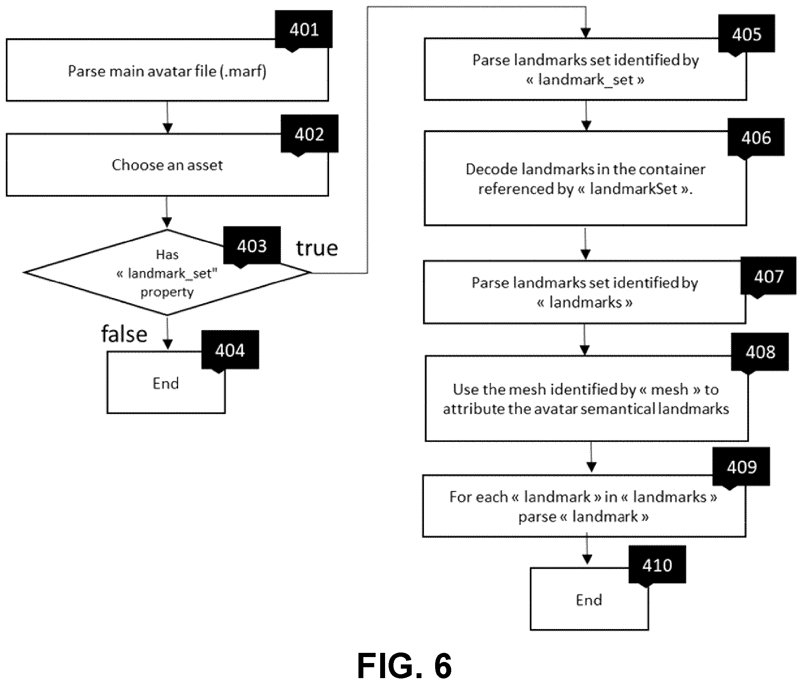

Landmarks of a file (e.g., a MARF file) may be provided. FIG. 6 shows an example flowchart for attributing avatar landmarks. At 401, the parsing may start with an application parsing the main avatar file (e.g., a .marf (MARF) file). At 402, the application may select one of the assets in the file (e.g., the MARF file). At 403 and/or 404, if the asset has the "landmark_set" property set to false, there may be no landmarks for this asset. The process may end. At 405, if the asset has the "landmark_set" property set as true, the landmark set referenced by " landmark_set" may be parsed in the "landmarkSet" property in the "components" root property of the file (e.g., MARF file). At 406, the landmark in the container referenced by the "landmarkSet" property of the landmarks set may be decoded. At 407, the landmark set referenced by "landmarks" may be parsed in the "components" root property of the file (e.g., MARF file). At 408, the mesh identified by the "mesh" property of the landmarks set may be used to semantically describe the landmarks on the shape of the avatar. At 408, the process may end.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device comprising:
a processor configured at least to:
receive a file comprising a representation of an avatar, wherein the file comprises a plurality of assets, and wherein the file indicates keypoint and landmark component information;
select an asset from the plurality of assets in the File based on parsing the File;
determine a container based on the selected asset and the keypoint and landmark component information;
decode at least one of a keypoint or a landmark based on the determined container; and
animate an avatar based on the at least one of the keypoint or landmark.

2. The device of claim 1, wherein the file comprises a keypoints property, wherein the keypoints property indicates the keypoint and landmark component information, wherein the keypoint property indicates a list of keypoint sets and indicates at least one of a name associated with each keypoint set in the list of keypoint sets or an anchor associated with each keypoint set in the list of keypoint sets.

3. The device of claim 1, wherein the file comprises an anchors property, wherein the anchors property indicates the keypoint and landmark component information, wherein the anchors property indicates a list of anchors and indicates at least one of an identification, a name, or a transform associated with each anchor in the list of anchors.

4. The device of claim 3, wherein the anchors property further indicates a binding list and a binding weight, wherein the binding list indicates a list of anchors identifiers.

5. The device of claim 3, wherein the anchors property further indicates at least one of a joints indication or a vertices indication, wherein the joints indication indicates a location of a file associated with a list of vertex identifiers, and wherein the vertices indication indicates a location of a file associated with a list of vertex identifiers.

6. The device of claim 1, wherein the file comprises a landmark set property, wherein the landmark set property indicates the keypoint and landmark component information, wherein the landmark set property indicates a list of landmark sets for a mesh, and wherein the landmark set property indicates at least one of a name, a description, a type, a landmark identifier, or a mesh associated with each landmark set in the list of landmark sets.

7. The device of claim 1, wherein the file comprises a landmarks property, wherein the landmarks property indicates the keypoint and landmark component information, wherein the landmarks property indicates a list of landmarks, and wherein the landmarks property indicates at least one of an identifier, a name, a description, a type, a vertex, a face, or a weight associated with each landmark in the list of landmarks.

8. The device of claim 1, wherein the file comprises at least one of a keypoint set property or a landmark set property, wherein the keypoint set property indicates a keypoint set identifier associated with a controller set associated with the asset, and wherein the landmark set property indicates a landmark set identifier associated with a landmark set associated with the asset.

9. The device of claim 1, wherein the file comprising the representation of the avatar is an MPEG avatar representation format (MARF) file.

10. A method comprising:
receiving a file comprising a representation of an avatar, wherein the file comprises a plurality of assets, and wherein the file indicates keypoint and landmark component information;
selecting an asset from the plurality of assets in the File based on parsing the File;
determining a container based on the selected asset and the keypoint and landmark component information;
decoding at least one of a keypoint or a landmark based on the determined container; and
animating an avatar based on the at least one of the keypoint or landmark.

11. The method of claim 10, wherein the file comprises a keypoints property, wherein the keypoints property indicates the keypoint and landmark component information, wherein the keypoint property indicates a list of keypoint sets and indicates at least one of a name associated with each keypoint set in the list of keypoint sets or an anchor associated with each keypoint set in the list of keypoint sets.

12. The method of claim 10, wherein the file comprises an anchors property, wherein the anchors property indicates the keypoint and landmark component information, wherein the anchors property indicates a list of anchors and indicates at least one of an identification, a name, or a transform associated with each anchor in the list of anchors, wherein the anchors property further indicates a binding list and a binding weight, wherein the binding list indicates a list of anchors identifiers, and wherein the anchors property further indicates at least one of a joints indication or a vertices indication, wherein the joints indication indicates a location of a file associated with a list of vertex identifiers, and wherein the vertices indication indicates a location of a file associated with a list of vertex identifiers.

13. The method of claim 10, wherein the file comprises a landmark set property, wherein the landmark set property indicates the keypoint and landmark component information, wherein the landmark set property indicates a list of landmark sets for a mesh, wherein the landmark set property indicates at least one of a name, a description, a type, a landmark identifier, or a mesh associated with each landmark set in the list of landmark sets, wherein the file comprises a landmarks property, wherein the landmarks property indicates the keypoint and landmark component information, wherein the landmarks property indicates a list of landmarks, and wherein the landmarks property indicates at least one of an identifier, a name, a description, a type, a vertex, a face, or a weight associated with each landmark in the list of landmarks..

14. The method of claim 10, wherein the file comprises at least one of a keypoint set property or a landmark set property, wherein the keypoint set property indicates a keypoint set identifier associated with a controller set associated with the asset, and wherein the landmark set property indicates a landmark set identifier associated with a landmark set associated with the asset.

15. The method of claim 10, wherein the file comprising the representation of the avatar is an MPEG avatar representation format (MARF) file.
